# EUROPEAN PATENT APPLICATION

(11) **EP 1 901 370 A1**
(43) Date of publication of application: **19.03.2008**
(21) Application number: 06745718.4
(22) Date of filing: 26.04.2006
(51) Int. Cl.: H01M 4/04, B05C 3/12, B05C 3/132, B05C 9/14, B05D 1/18, B23K 9/025, B23K 9/16, H01M 4/26

(54) **ELECTRODE MIXTURE PASTE APPLYING METHOD AND DEVICE**

(30) Priority: 09.05.2005 JP 2005135544
(71) Applicant: MATSUSHITA ELECTRIC INDUSTRIAL CO., LTD., Osaka 571-8501 (JP)
(72) Inventor: KATO, Masahiko c/o Matsushita Electric Industrial Co., Ltd, Chuo-ku Osaka City 540-6207 (JP); YAGINUMA, Hironori Matsushita Electric Industrial Co., Ltd, Chuo-ku Osaka City 540-6207 (JP); MINAMINO, Keiji Mitsushita Electric Industrial Co., Ltd, Chuo-ku Osaka City 540-6207 (JP)
(74) Representative: Haley, Stephen
(86) International application number: PCT/JP2006/308740
(87) International publication number: WO 2006/120905

(57) **Abstract**

An electrode mixture paste application method includes: a first step of unwinding a core material (2) wound in a coil shape; a second step of immersing the core material in an electrode mixture paste (5); a third step of adjusting an application amount of the electrode mixture paste; a fourth step of drying a paste-coated sheet (6) with the electrode mixture paste applied to the both sides thereof; and a fifth step of winding the paste-coated sheet in a coil shape, wherein a seam welding step for connecting coils of the core material to each other is provided between the first and second steps, wherein a metal containing molybdenum and/or tungsten is used as a welding electrode (91) in the seam welding step, and wherein a mechanism for air cooling by gas is provided. This can achieve a stable method for applying an electrode mixture paste in which apprehensions for micro short circuits and the like are eliminated and troubles in the step of welding core materials can be avoided.

## Description

### TECHNICAL FIELD

The present invention relates to a method and an apparatus for applying an electrode mixture paste to a core material made of porous metal thin plate. In particular, the invention relates to an improved method for welding core materials to each other.

### BACKGROUND ART

Batteries such as alkaline storage batteries and lithium ion secondary batteries are widely used as the power source for portable devices, machine tools, or electric vehicles. Of these, nickel metal-hydride storage batteries have a relatively high energy density and excellent durability, and the applications thereof, including as power sources for electric vehicles, are being expanded.

Generally, the main components of nickel metal-hydride storage batteries include: a positive electrode formed by filling a three-dimensional metal porous material with nickel hydroxide and other materials; and a negative electrode formed by applying an electrode mixture paste composed of a hydrogen-absorption alloy and other materials to porous metal thin plate (hereinafter simply abbreviated as a "core material") such as a punched metal. Of these two, the negative electrode can be produced continuously because of the nature of its production process, which has received attention as a highly efficient process. Specifically, a method has been proposed in which, after the core material is immersed in the electrode mixture paste, the application amount of the electrode mixture paste is adjusted to produce a paste-coated sheet.

A core material serving as a precursor of a paste-coated sheet is produced as a coil of a several hundred to several thousand meter length thereof in view of its distribution. When a paste-coated sheet of several tens of thousand meter is continuously produced using such core materials, connection of the core materials in a coil shape is required several to several tens of times.

As a method for connecting core materials to each other, a method (seam welding) is generally used in which a roller electrode and a plate-like electrode are used as welding electrodes and welding is intermittently performed by electrify between the roller electrode and the plate-like electrode while rotating the roller electrode. The roller electrode has a hole at the center thereof. A roller pin having a diameter slightly smaller than the diameter of the hole of the roller electrode is disposed at the distal ends of a two-pronged shaped roller holder so as to extend between the two-pronged shaped end portions. Therefore, the roller electrode is coupled to the roller holder by the roller pin inserted into the hole of the roller electrode. In this structure, the roller electrode can travel while rotating about the roller pin serving as the rotation center. As in the welding electrodes, the roller holder and the roller pin are made of a high electric conductivity material.

When a normal material is seam-welded, copper or a copper alloy having a particularly high electric conductivity and high versatility is used as the material for a welding electrode. However, when a material for battery use is welded, an electrochemically stable material must be used which, even when splashes caused by sparks are mixed into an electrolyte, is not dissolved in the electrolyte. Specifically, a technique has been proposed in which molybdenum or the like is used for the material and spot welding is carried out using this material (see, for example, Patent Document 1). It is conceivable that a paste-coated sheet can be continuously produced by carrying out seam welding utilizing this technique in a state which has no apprehension for micro short circuits and the like due to re-precipitation of splashes caused by sparks.
[Patent Document 1] Japanese Patent Laid-Open Publication No. 2003-031203

### DISCLOSURE OF THE INVENTION

### PROBLEMS TO BE SOLVED BY THE INVENTION

Apprehensions for micro short circuits due to mixing of splashes caused by sparks are eliminated by replacing the material for a welding electrode from copper (a copper alloy) to molybdenum or the like, but heat generation during welding tends to increase. When spot welding is preformed point by point as in Patent Document 1, the influence of heat transfer is negligible. However, in the case of seam welding, heat generation is significant since welding time is long. When the amount of heat generation reaches or exceeds a certain value, the diameter of the above-described roller pin increases due to thermal expansion and becomes the same as the diameter of the hole of the roller electrode. Therefore, the frictional force increases to prevent the rotation of the roller electrode, and continuous welding cannot be performed. As a result, this causes a problem that the productivity is reduced.

The present invention has been made in view of the foregoing problems. Accordingly, it is an object of the invention to provide a stable method for applying an electrode mixture paste in which apprehensions for micro short circuits and the like can be eliminated and troubles in the step of welding core materials can be avoided.

### MEANS FOR SOLVING THE PROBLEMS

In order to achieve the above object, the present invention provides a method for applying an electrode mixture paste, including: a first step of unwinding a core material wound in a coil shape; a second step of immersing the core material in an electrode mixture paste; a third step of adjusting an application amount of the electrode mixture paste; a fourth step of drying a paste-coated sheet with the electrode mixture paste applied to the both sides thereof; and a fifth step of winding the paste-coated sheet in a coil shape, wherein a seam welding step for connecting coils of the core material to each other is provided between the first and second steps and wherein, in the seam welding step, a metal containing molybdenum and/or tungsten is used as a welding electrode and a mechanism for air cooling by gas is provided.

As means for realizing the above-described application method, the present invention provides an apparatus for applying an electrode mixture paste. The apparatus includes: an uncoiler unit for unwinding a core material wound in a coil shape; an immersion unit for immersing the core material in an electrode mixture paste; an application amount adjusting unit for adjusting an application amount of the electrode mixture paste; a drying unit; and a coiler unit for winding a paste-coated sheet, after application and drying, in a coil shape, wherein a seam welding unit for connecting coils of the core material to each other is provided between the uncoiler unit and the immersion unit and wherein, in the seam welding step, a metal containing molybdenum and/or tungsten is used as a welding electrode and a mechanism for air cooling by gas is provided.

By using such an apparatus, the surroundings of a welding electrode generating heat are air-cooled. Therefore, a trouble that a roller pin adheres to the welding electrode (a roller electrode) due to thermal expansion can be avoided even when seam welding is performed by using a welding electrode material which does not cause apprehension for micro short circuits but easily generates heat. Hence, core materials in a coil shape can be supplied continuously.

### BRIEF DESCRIPTION OF THE DRAWINGS

Fig. 1 is a schematic view of an electrode mixture paste application apparatus of the present invention; and
Figs. 2A and 2B show a seam welding unit in the apparatus of the present invention, Fig. 2A being a schematic perspective view, Fig. 2B being a schematic front view.

### BEST MODE FOR CARRYING OUT THE INVENTION

Hereinbelow, the best mode for carrying out the invention will be described in detail with reference to the drawings.

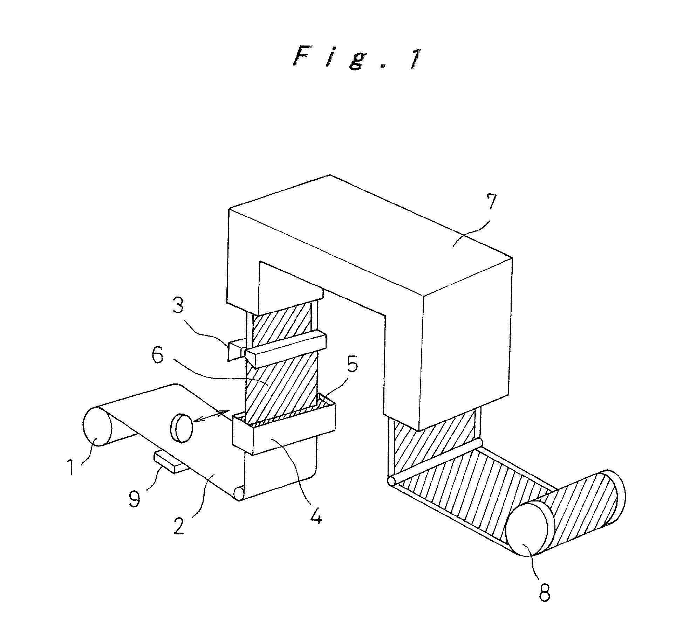

Fig. 1 is a schematic view of an apparatus for applying electrode mixture paste in accordance with the present invention. A coil-shaped core material 2 made of porous metal thin plate is unwound by an uncoiler unit 1. Subsequently, the core material 2 is introduced into an immersion unit 4 filled with an electrode mixture paste 5, and the electrode mixture paste 5 is applied onto the core material 2. Next, the core material 2 passes through an application amount adjusting unit 3 to form a paste-coated sheet 6. Then, the paste-coated sheet 6 is introduced into a drying unit 7 and thereafter is wound in a coil shape on a coiler unit 8. In this instance, a seam welding unit 9 for connecting the coil-shaped core materials 2 to each other is provided between the uncoiler unit 1 and the immersion unit 4.

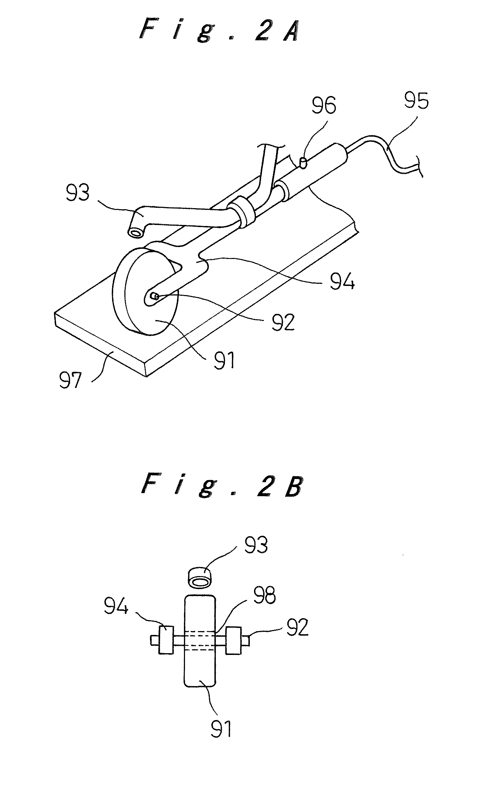

Figs. 2A and 2B are a schematic perspective view and a schematic front view, respectively, illustrating an example of the seam welding unit in this apparatus. The seam welding unit 9 has a roller electrode 91 and a plate-like electrode 97 each serving as a welding electrode. A welding current is allowed to intermittently flow between the roller electrode 91 and the plate-like electrode 97 to perform seam welding. The roller electrode 91 has a hole 98 at the center thereof. A roller pin 92 having a diameter slightly smaller than the diameter of the hole 98 of the roller electrode 91 is disposed at the distal ends of a two-pronged shaped roller holder 94 so as to extend between the two-pronged shaped end portions. Accordingly, the roller electrode 91 is coupled to the roller holder 94 by the roller pin 92 inserted into the hole 98 of the roller electrode 91. In this structure, the roller electrode 91 can travel while rotating about the roller pin 92 serving as the rotation center. And a switch 96 is disposed at any position of the roller holder 94. When the switch 96 is pressed, the roller electrode 91 and the plate-like electrode 97 are brought into a closed circuit state through an electric cord 95, whereby a welding current flows intermittently.

As the essential feature of the present invention, a gas blowing hole 93 is provided in close proximity to the welding electrodes (specifically, the roller electrode 91) in order to air-cool the surroundings of the welding electrodes. A gas is blown from the gas blowing hole 93, and an excessive temperature rise of the roller electrode 91 can be prevented. Therefore, it is possible to avoid such a trouble that the roller electrode 91 cannot be rotated due to an increase of the frictional force since the diameter of the roller pin 92 becomes the same as the diameter of the hole 98 of the roller electrode 91 due to thermal expansion.

In this instance, if the welding current and the operation of the gas blowing are linked together, it is possible to avoid the positional displacement of the core material 2 caused by continuously blowing gas on the seam welding unit 9. Therefore, the positional accuracy of welding can be improved. As a specific example, there is a mechanism in which, when the switch 96 disposed on the roller holder 94 is pressed, a welding current intermittently flows and, at the same time, a sequencer opens a valve (not shown) provided in close proximity to the gas blowing hole 93 to allow gas blowing.

In Figs. 2A and 2B, an example is shown in which the gas blowing hole 93 is integrated with the roller holder 94. However, the present invention is not limited to this example. For example, the gas blowing hole 93 may be disposed on the application apparatus side. Further, in Fig. 2, an example is shown in which the switch 96 is disposed at any position of the roller holder 94. However, the present invention is not limited to this example. For example, the switch 96 may be disposed in the lowermost portion on the application apparatus side and may be of a foot-operated type.

Hereinbelow, Example of the present invention will be described using a negative electrode (a hydrogen-absorption alloy electrode) for a nickel metal-hydride storage battery. Of course, the present invention is not limited to Example, so long as the core material is porous metal thin plate. The invention can also be applied to a sintered substrate which is a precursor of a sintered nickel positive electrode for an alkaline storage battery and to positive and negative electrodes for a lithium polymer battery in which a metal lath is used as the porous metal thin plate.

### (Example 1)

A hydrogen-absorption alloy represented by a chemical formula of MmNi_{3.55}Co_{0.75}Mn_{0.4}Al_{0.3} was pulverized into particles, having an average diameter of 30 µm, in water using a wet ball-mill, thereby obtaining the hydrogen-absorption alloy powder. The alloy powder was immersed in an alkali aqueous solution for surface treatment. Subsequently, 10 kg of an aqueous solution of carboxymethyl cellulose (solid content ratio: 1.5%) and 0.4 kg of Ketjen black were added to 100 kg of the hydrogen-absorption alloy powder, and the mixture was kneaded. Furthermore, 1.75 kg of an aqueous solution of styrenebutadiene copolymer rubber particles (solid content ratio: 40%) was added thereto, and the resultant mixture was stirred, thereby producing an electrode mixture paste 5. thereby producing an electrode mixture paste 5.

This electrode mixture paste 5 was applied at a rate of 5 m/min to both sides of a core material 2 (the overall length of one coil: 200 m), while the electrode mixture paste 5 was shaved off from an area within 20 mm from each of the edges so as to obtain an applied width of 260 mm and an overall thickness after application of 260 µm. In this instance, the core material 2 was made of an iron-made punched metal plated with nickel and having a thickness of 60 µm, a width of 300 mm, a punched hole diameter of 1 mm, and a pore rate of 42%. Specifically, the electrode mixture paste 5 was continuously applied over a length of 1000 m (seam welding was performed four times) using an application facility having the seam welding unit 9 shown in Figs. 2A and 2B, whereby a paste-coated sheet 6 was produced.

Each of the roller electrode 91, the roller pin 92, the roller holder 94, and the plate-like electrode 97 was made of molybdenum. During seam welding operation, air (compressed air) was continuously blown from the gas blowing hole 93 toward the roller electrode 91 irrespective of the ON-OFF state of the switch 96.

A trouble that the roller electrode 91 is not rotated did not occur during seam welding performed four times. After the application over a length of 1000 m, the length from one edge of the core material 2 to the applied portion of the electrode mixture paste 5 was measured at the aftermost portion (a portion at which the application is completed) of the paste-coated sheet 6. The results showed that the deviation from an initial setting value of 20 mm was 0.5 mm.

### (Example 2)

The same procedure as in Example 1 was repeated to produce a paste-coated sheet 6, except that each of the roller electrode 91, the roller pin 92, the roller holder 94, and the plate-like electrode 97 was made of tungsten.

A trouble that the roller electrode 91 is not rotated did not occur during seam welding performed four times. After the application over a length of 1000 m, the length from one edge of the core material 2 to the applied portion of the electrode mixture paste 5 was measured at the aftermost portion (a portion at which the application is completed) of the paste-coated sheet 6. The results showed that the deviation from an initial setting value of 20 mm was 0.6 mm.

### (Example 3)

The same procedure as in Example 1 was repeated to produce a paste-coated sheet 6, except that the welding current and the operation of gas blowing were linked together using a sequencer and that air (compressed air) was blown from the gas blowing hole 93 only when the switch 96 was pressed.

A trouble that the roller electrode 91 is not rotated did not occur during seam welding performed four times. After the application over a length of 1000 m, the length from one edge of the core material 2 to the applied portion of the electrode mixture paste 5 was measured at the aftermost portion (a portion at which the application is completed) of the paste-coated sheet 6. The results showed that the deviation from an initial setting value of 20 mm was only 0.05 mm.

### (Comparative Example)

The same procedure as in Example 1 was repeated to produce a paste-coated sheet 6, except that the gas blowing hole 93 was not provided and that the roller electrode 91 was not air-cooled.

A trouble that the roller electrode 91 was not rotated occurred during the first seam welding. Therefore, the production of the paste-coated sheet 6 was interrupted. The seam welding unit 9 was inspected, and the results showed that the frictional force between the roller pin 92 and the roller electrode 91 was increased to cause the roller electrode 91 not to rotate normally. This may be because, since the material for the welding electrodes is molybdenum having a lower electrical conductivity than that of copper, the temperature of the roller electrode 91 is excessively increased due to the seam welding performed continuously, whereby the diameter of the roller pin 92 becomes the same as the diameter of the hole 98 of the roller electrode 91 due to thermal expansion. Such a trouble also occurred when air cooling was not performed in Example 2 (the material was tungsten).

As described above, when seam welding is performed using the welding electrode material which does not cause apprehension for micro short circuits and the like but easily generates heat, the air-cooling to the surroundings of the roller electrode 91 generating heat can avoid such a trouble that the roller electrode 91 cannot be rotated normally due to an increase of the frictional force since the diameter of the roller pin 92 becomes the same as the diameter of the hole 98 of the roller electrode 91 due to thermal expansion. Therefore, the core materials 2 on a coil can be supplied continuously. It should be noted that the results of Example 3 show that the dimensional accuracy of application was significantly high even after the paste-coated sheet 6 was produced for a long period of time. This may be because the positional displacement of the core material 2 caused by continuously blowing gas on the seam welding unit 9 can be avoided by linking the welding current and the operation of gas blowing together, whereby the positional accuracy of welding is improved.

### INDUSTRIAL APPLICABILITY

As has been described, according to the present invention, an electrode mixture paste can be continuously applied in a state which has no apprehension for micro short circuits and the like, and therefore the electrode mixture paste can be applied and dried while a core material in a coil shape is continuously supplied. Accordingly, the invention is highly useful and can be widely used as a technique for manufacturing electrodes for various batteries including nickel metal-hydride storage batteries.

## Claims

1. An electrode mixture paste application method for applying an electrode mixture paste (5) on a core material (2) made of porous metal thin plate while travelling the core material, the method comprising:
a first step of unwinding the core material wound in a coil shape;
a second step of immersing the core material in the electrode mixture paste;
a third step of adjusting an application amount of the electrode mixture paste;
a fourth step of drying a paste-coated sheet (6) with the electrode mixture paste applied to the both sides thereof; and
a fifth step of winding the paste-coated sheet in a coil shape,
wherein a seam welding step for connecting coils of the core material to each other is provided between the first and second steps,
wherein a welding electrode (91) in the seam welding step is made of a metal containing molybdenum and/or tungsten, and
wherein the seam welding step comprises a mechanism for air cooling by gas.

2. The electrode mixture paste application method according to claim 1, wherein in the seam welding step a welding current and an operation of gas blowing are linked together.

3. An electrode mixture paste application apparatus for applying an electrode mixture paste (5) on a core material (2) made of porous metal thin plate while travelling the core material, the apparatus comprising:
an uncoiler unit (1) for unwinding the core material wound in a coil shape;
an immersion unit (4) for immersing the core material in the electrode mixture paste;
an application amount adjusting unit (3) for adjusting an application amount of the electrode mixture paste;
a drying unit (7); and
a coiler unit (8) for winding a paste-coated sheet (6), after applying and drying, in a coil shape,
wherein a seam welding unit (9) for connecting coils of the core material to each other is provided between the uncoiler unit and the immersion unit,
wherein a welding electrode (91) in the seam welding unit is made of a metal containing molybdenum and/or tungsten, and
wherein the seam welding unit comprises a mechanism for air cooling by gas.

4. The electrode mixture paste application apparatus according to claim 3, wherein in the seam welding unit (9) a welding current and an operation of gas blowing are linked together.

## Amended claims

### Amended claims under Art. 19.1 PCT

**1.** (amended) An electrode mixture paste application method for applying an electrode mixture paste (5) on a core material (2) made of porous metal thin plate while travelling the core material, the method comprising:
a first step of unwinding the core material wound in a coil shape;
a second step of immersing the core material in the electrode mixture paste;
a third step of adjusting an application amount of the electrode mixture paste;
a fourth step of drying a paste-coated sheet (6) with the electrode mixture paste applied to the both sides thereof; and
a fifth step of winding the paste-coated sheet in a coil shape,
wherein a seam welding step for connecting coils of the core material to each other is provided between the first and second steps,
wherein a welding electrode (91) in the seam welding step is made of a metal containing molybdenum and/or tungsten and comprises a plate-like electrode and a roller electrode which is coupled to a roller holder by a roller pin to form a structure allowing the roller electrode to travel while rotating, and
wherein the seam welding step comprises a mechanism for air-cooling surroundings of the roller electrode by gas.

**2.** The electrode mixture paste application method according to claim 1, wherein in the seam welding step a welding current and an operation of gas blowing are linked together.

**3.** (amended) An electrode mixture paste application apparatus for applying an electrode mixture paste (5) on a core material (2) made of porous metal thin plate while travelling the core material (2), the apparatus comprising:
an uncoiler unit (1) for unwinding the core material wound in a coil shape;
an immersion unit (4) for immersing the core material in the electrode mixture paste;
an application amount adjusting unit (3) for adjusting an application amount of the electrode mixture paste;
a drying unit (7); and
a coiler unit (8) for winding a paste-coated sheet (6), after application and drying, in a coil shape,
wherein a seam welding unit (9) for connecting coils of the core material to each other is provided between the uncoiler unit and the immersion unit,
wherein a welding electrode (91) in the seam welding unit is made of a metal containing molybdenum and/or tungsten and comprises a plate-like electrode and a roller electrode which is coupled to a roller holder by a roller pin to form a structure allowing the roller electrode to travel while rotating, and
wherein the seam welding unit comprises a mechanism for air-cooling surroundings of the roller electrode by gas.

**4.** The electrode mixture paste application apparatus according to claim 3, wherein in the seam welding unit (9) a welding current and an operation of gas blowing are linked together.

**5.** (added) The electrode mixture paste application method according to claim 1, wherein, in the seam welding step, welding is continuously performed by electrify between the roller electrode and the plate-like electrode while rotating the roller electrode.

**6.** (added) The electrode mixture paste application apparatus according to claim 3, wherein, in the seam welding unit (9), welding is continuously performed by electrify between the roller electrode and the plate-like electrode while rotating the roller electrode.
